# EUROPÄISCHE PATENTANMELDUNG

(11) **EP 4 362 317 A1**
(43) Veröffentlichungstag der Anmeldung: **01.05.2024**
(21) Anmeldenummer: 22203533.9
(22) Anmeldetag: 25.10.2022
(51) Int. Cl.: H02P 6/00

(54) **VERFAHREN ZUR KOMPENSATION VON TOLERANZEN, SPIEL UND ELASTIZITÄT IN EINEM MOTORISCH ANGETRIEBENEN HYDRAULIKVENTIL**

(71) Anmelder: Bucher Hydraulics GmbH, 79771 Klettgau (DE)
(72) Erfinder: Salah, Gerd, 53773 Hennef-Blankenbach (DE)
(74) Vertreter: karo IP

(57) **Zusammenfassung**

Verfahren zum Erkennen eines mechanischen Spiels (Wₛ) in einem System (3) aufweisend ein Hydraulikventil (1) und einen Ventilantrieb (5) zum Antrieb des Hydraulikventils (1), wobei ein von dem Ventilantrieb (5) angetriebener Ventilschieber (2) des Hydraulikventils (1) mit mindestens einer Rückstellfeder (6) eingespannt ist, welche dazu eingerichtet ist, den Ventilschieber (2) bei einem stromlosen Ventilantrieb (5) aus jeder beliebigen Ventilschieberposition (7) zurück in eine Neutralstellung (4) des Ventilschiebers (2) zu schieben.

## Beschreibung

Die Erfindung betrifft ein Verfahren zur Kompensation von Toleranzen, Spiel und Elastizität in einem motorisch angetriebenen Hydraulikventil.

Derartige Hydraulikventile sind bevorzugt mit einer Rückstellfeder ausgeführt, die einen Ventilschieber des Ventils im Falle eines Stromausfalls mechanisch in eine sichere Position drückt, in welcher kein Hydraulikfluid durch das Hydraulikventil fließen kann. Üblicherweise haben solche Hydraulikventile einen P-Anschluss, an welchem ein Versorgungsdruck anliegt und einen T-Anschluss, welcher an einen Rücklauf angeschlossen ist. Durch die Einstellung des Ventilschiebers kann der P-Anschluss wahlweise mit einem Anschluss A (A-Anschluss) oder einem Anschluss B (B-Anschluss) verbunden werden, so dass dann an dem jeweiligen Anschluss A oder B Hydraulikflüssigkeit aus dem P-Anschluss bereitgestellt wird. Der andere Anschluss B oder A ist dann mit dem T-Anschluss verbunden, so dass hier die Hydraulikflüssigkeit aus dem Anschluss in den Rücklauf abfließen kann. Ein Stellbereich des Ventilschiebers, in dem kein Fluid vom P-Anschluss zu den Anschlüssen A oder B bzw. von A oder B zu T fliesen kann (die oben genannte sichere Position) wird auch Überdeckung genannt. Die sichere Position wird üblicherweise auch als Nullstellung oder Neutralstellung bezeichnet.

Der Ventilantrieb derartiger Hydraulikventile erfolgt bevorzugt mit einem elektrischen Motor (beispielsweise einem Schrittmotor oder einem BLCD-Motor (BLCD = brushless direct current = bürstenloser Gleichstrommotor), welcher einen Ventilschieber des Hydraulikventils betätigt. Der Ventilschieber und der Motor sind üblicherweise durch ein Getriebe miteinander gekoppelt. Das Getriebe kann sowohl 1-stufig als auch mehrstufig aufgebaut sein. Beispielsweise umfasst ein einstufiges Getriebe regelmäßig zumindest eine Zahnstange am Ventilschieber und ein Zahnrad am Motor, wobei der Motor mit dem Zahnrad die Zahnstange am Ventilschieber antreibt und eine Drehbewegung am Schrittmotor in eine Linearbewegung an der Zahnstange/am Ventilschieber umgesetzt wird.

Eine Nullstellung ist regelmäßig durch eine doppelt eingespannte Rückstellfeder realisiert, die den Ventilschieber in die Nullstellung bringt, wenn kein Strom am Motor anliegt oder der anliegende Strom soweit reduziert wird, das die Federkraft ausreicht die Motorkraft zu überdrücken.

Insbesondere aufgrund des Getriebes, aber auch aufgrund von anderen Komponenten, wie dem Schrittmotor und dem Hydraulikventil selbst liegt regelmäßig ein gewisses Spiel und eine gewisse Elastizität sowie auch Toleranzen im System bestehend aus dem Hydraulikventil und dem Ventilantrieb vor. Technisch haben solche Toleranzen, Spiel und Elastizität die Auswirkung, dass der Motor bei einem Richtungswechsel der Bewegung regelmäßig einen zusätzlichen Weg bzw. (im Falle eines Schrittmotors als Motor) ein paar Schritte zusätzlich bewegt werden muss, bevor eine gewünschte Bewegung des Ventilschiebers auftritt.

Für bestimmte Anwendungen von solchen Hydraulikventilen ist die Kompensation von Toleranzen, Spiel und Elastizität im System sehr hilfreich. Damit diese Kompensation möglich ist, ist es vorteilhaft, wenn die Toleranzen, dass Spiel bzw. die Elastizität bekannt sind - beispielsweise in Form eines hinterlegten Parameters, zum Beispiel einem Parameter, der angibt wieviele Schritte ein Schrittmotor bei einem Richtungswechsel der Bewegung des Ventilschiebers zusätzlich bewegt werden muss.

Ein Verfahren zur Kompensation eines Spiels in einem System aus Hydraulikventil und Ventilantrieb ist beispielsweise aus der Internationalen Patentanmeldung WO 2017/017557 A1 bekannt. Gemäß der dort beschriebenen Vorgehensweise wird ein Schrittmotor im Ventilantrieb bei jedem Start des Systems zunächst mit einem reduzierten Antriebsstrom in die eine Richtung gefahren bis der Schrittmotor den Ventilschieber mit dem reduzierten Antriebsstrom nicht weiter bewegen kann. Dieser Punkt wird anhand eines Schrittverlustes erkannt. Anschließend wird der Ventilschieber mit dem reduzierten Antriebsstrom in die andere Richtung gefahren bis der Schrittmotor den Ventilschieber nicht weiter bewegen kann. Dieser Punkt wird ebenfalls anhand eines Schrittverlustes erkannt. Anhand dieser beiden Punkte und insbesondere anhand der Messung der Anzahl an Schritten, die der Schrittmotor zwischen diesen beiden Punkten zurücklegt, wird das Spiel des Getriebes erkannt.

Die Steuerung des Ventilantriebs derartiger Hydraulikventile weist bei Einsatz eines Schrittmotors als Motor bevorzugt ein Schrittverlusterkennungsmodul auf, mit welchem der Schrittverlust erkannt werden kann. Ein Schrittverlust zeichnet sich insbesondere durch einen auftretenden Schlupf im Motor bzw. im Ventilantrieb aus. Wenn der Schrittmotor von seiner Steuerung eine Schrittvorgabe erhält und die für die Durchführung des Schrittes vorgesehenen Antriebsströme an den Schrittmotor angelegt werden und der Schrittmotor den Schritt trotzdem nicht ausführt, ist dies ein Schlupf in dem Schrittmotor und ein Schrittverlust. Ein möglicher Weg zur Schrittverlusterkennung ist beispielsweise in dem Europäischen Patent EP 3 142 244 B1 detailliert beschrieben. Es sind allerdings verschiedene Möglichkeiten bekannt Schrittverluste eines Schrittmotors zu erkennen. Die Möglichkeit zur Erkennung von Schrittverlusten ist für den effizienten Betrieb derartiger Ventile ausgesprochen vorteilhaft. Grundsätzlich ist die Schrittverlusterkennung allerdings nicht notwendig, um das hier beschriebene Verfahren durchzuführen. Es können auch andere Methoden verwendet werden zu erkennen, wenn ein Motor nicht mehr in der Lage ist eine von einer Steuerung vorgegebene Bewegung durchzuführen. Im Falle eines BLCD-Motors kann hierfür beispielsweise eine Überlasterkennung eingesetzt werden.

Aufgabe der hier vorliegenden Erfindung ist es, ein mit Bezug auf den Stand der Technik besonders vorteilhaftes Verfahren zur Erkennung eines mechanischen Spiels in Hydraulikventilen anzugeben. Diese Aufgabe wird gelöst mit der Erfindung gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann die einzelnen Merkmale in technologisch sinnvoller Weise miteinander kombiniert und damit zu weiteren Ausgestaltungen der Erfindung gelangt.

Die Erfindung betrifft ein Verfahren zum Erkennen eines mechanischen Spiels in einem System aufweisend ein Hydraulikventil und einen Ventilantrieb zum Antrieb des Hydraulikventils, wobei ein von dem Ventilantrieb angetriebener Ventilschieber des Hydraulikventils mit mindestens einer Rückstellfeder eingespannt ist, welche dazu eingerichtet ist, den Ventilschieber bei einem stromlosen Ventilantrieb aus jeder beliebigen Ventilschieberposition zurück in eine Neutralstellung des Ventilschiebers zu schieben, aufweisend die folgenden Schritte:
a) Fahren des Ventilschiebers mit dem Ventilantrieb in eine erste Richtung bis zu einer ersten Ventilschieberposition außerhalb einer Neutralstellung;
b) Reduzieren des Stroms am Ventilantrieb, so dass der Ventilschieber von der Rückstellfeder in einer zweiten Richtung entgegengesetzt zur ersten Richtung zurück in die Neutralstellung bewegt wird;
c) Fahren des Ventilschiebers mit dem Ventilantrieb weiter in die zweite Richtung bis zu einer definierten zweiten Position außerhalb der Neutralstellung und Ermitteln einer ersten Wegstrecke von der Neutralstellung zu der definierten zweiten Position;
d) Reduzieren des Stroms am Ventilantrieb, so dass der Ventilschieber von der Rückstellfeder in die erste Richtung zurück in die Neutralstellung bewegt wird;
e) Fahren des Ventilschiebers mit dem Ventilantrieb in die zweite Richtung bis zu der definierten zweiten Position außerhalb der Neutralstellung und Ermitteln einer zweiten Wegstrecke von der Neutralstellung zu der definierten zweiten Position; und
f) Berechnen des Spiels als Differenz zwischen der zweiten Wegstrecke und der ersten Wegstrecke.

Das Verfahren kann bei Systemen mit einem Hydraulikventil mit einem Ventilschieber und einem daran angeschlossenen Ventilantrieb zur Betätigung des Ventilschiebers grundsätzlich verwendet werden. Dies gilt unabhängig von der Art des im Ventilantrieb vorgesehen Motors. Solche Motoren können beispielsweise Schrittmotoren oder auch BLCD-Motoren (BLCD = brushless direct current, bürstenloser Gleichstrommotor) sein. Wenn im Folgenden der Begriff "Schrittmotor" verwendet wird, ist dies generisch für jeden Art von Motor zu verstehen, wobei Schrittmotoren eine bevorzugte Ausführungsform sind, bei denen die Bewegung des Motors über die Anzahl der Schritte überwacht werden kann.

Grundsätzlich besteht bei solchen Systemen mit Hydraulikventil und Ventilschieber eine mechanische Kopplung zwischen dem Motor des Ventilantriebs und dem Ventilschieber des Hydraulikventils. Wenn ein Rotor des Motors bewegt wird, wird entsprechend proportional auch der Ventilschieber bewegt. Die mechanische Kopplung des Motors und des Ventilschiebers erfolgt üblicherweise über ein Getriebe. Der Begriff "Getriebe" ist hier generisch zu verstehen. Eine mögliche Variante ist ein Getriebe bestehend aus mindestens einem Zahnrad und Zahnstange zur Umsetzung einer Rotationsbewegung des Motors in eine Linearbewegung des Ventilschiebers. Der Aufbau des Getriebes ist für die Funktionsweise des hier beschriebenen Verfahrens nicht entscheidend. Es könnten beispielsweise auch Schneckengetriebe, Kurbelwellen, Spindeln oder Riemen zur mechanischen Kopplung von Motor und Ventilschieber (als Getriebe) verwendet werden.

Das Verfahren stellt einen neuen Weg zur Erkennung des mechanischen Spiels vor, welcher anders als bekannte Verfahren die Messung des Spiels nicht dadurch durchführt, dass in beide Bewegungsrichtungen des Ventilschiebers (erste Richtung und zweite Richtung) gegen Punkte oder Anschläge gefahren wird. Stattdessen wird der Ventilschieber durch die Rückstellfeder aus beiden Richtungen (passiv) in die Neutralstellung bewegt. Hieraus ergeben sich verschiedene Positionen des Ventilschiebers innerhalb der Neutralstellung, die zur Erkennung eines Spiels verwendet werden können. Nach Schritt b) und d) bleiben der Ventilschieber bzw. der Ventilantrieb bzw. ein Schrittmotor an einer anderen Stelle bzw. an unterschiedlichen Positionen innerhalb der Neutralstellung stehen. Der Abstand zwischen diesen Positionen kann berechnet werden, wenn die Wegstrecken von diesen Positionen zu einer definierten Position ermittelt werden bzw. gemessen werden können. Dies geschieht in den Schritten c) und e). Anhand der Differenz dieser Wegstrecken kann das Spiel berechnet werden (Schritt f)).

Mit einer "definierten Position" (hier der definierten zweiten Position gemäß den Schritten c) und e)) ist gemeint, dass zuverlässig erkannt werden kann, dass der Ventilschieber sich in dieser definierten Position befindet. Dies kann auf unterschiedliche Art- und Weise erfolgen, die im Folgenden noch genauer erläutert werden. Wichtig ist nur, dass die Erkennung zuverlässig und wiederholbar möglich ist, so dass in Schritt c) und e) jeweils die gleiche definierte zweite Position erkannt wird. Damit, dass die definierte zweite Position in Schritt c) und in Schritt e) identisch ist, geht auch einher, dass die Fahrten zum Ansteuern dieser definierten Position ausgehend von der Neutralstellung in die gleiche Richtung (zweite Richtung) gehen. Diese Fahrten dienen zur Ermittlung der Wegstrecken aus denen als Differenz das Spiel bestimmt werden kann.

Es ist darauf hinzuweisen, dass die in Schritt c) und e) angefahrene definierte zweite Positionen von der ersten Position zu unterscheiden ist. Die erste Position muss nicht definiert sein. Das heißt: Es ist nicht erforderlich, dass diese Position zuverlässig wiederholt, erkennbar bzw. registrierbar ist.

Die Fahrt in Schritt a) in die entgegengesetzte erste Richtung dient dazu, das System in eine initiale Position zur Ausführung des Verfahrens zu bringen, so dass Schritt b) geeignet ausgeführt werden kann. Die erste Richtung, in der das System in Schritt a) gefahren wird, wird bevorzugt abgespeichert. Grundsätzlich wird während der Durchführung des beschriebenen Verfahrens und auch im sonstigen Betrieb des hier verwendeten Systems bestehend aus Hydraulikventil und Ventilantrieb immer die Richtung abgespeichert, in die der Ventilschieber bzw. der Ventilantrieb zuletzt bewegt wurden. Diese Information kann verwendet werden, um zusammen mit dem mit dem hier beschriebenen Verfahren ermittelten Parameter für das Spiel das Spiel zu kompensieren darauf wird im Folgenden noch im detaillierter eingegangen. Die Initialisierung des Verfahrens erfordert aufgrund der Eigenschaften des Systems nicht, dass die in Schritt a) angefahrene erste Position exakt definiert ist. Warum dies so ist, wird später im Detail erläutert.

Mit dem Begriff "Spiel" ist hier insbesondere ein Gesamtspiel gemeint, welches im System vorliegt. Üblicherweise beinhaltet das Spiel auch Elastizitäten in dem System, sowie gegebenenfalls auch Herstellungstoleranzen. Mit dem Begriff "Spiel" sind hier also insbesondere ein gegebenenfalls bauartbedingt vorgegebenes Spiel, Herstellungstoleranzen und Elastizitäten im System gemeint.

Das Verfahren kann auf dem Prüfstand oder im Endgerät im Feld durchgeführt und mit unterschiedlichen Ausprägungen und Details in verschiedenen Situationen des Betriebes eines Hydraulikventils verwendet werden.

Mit dem Verfahren kann nicht nur das Spiel erkannt werden, sondern es kann gegebenenfalls auch eine Prüfung der Funktionsweise der Rückstellfeder sowie der Steuerung des Hydraulikventils und insbesondere die Funktionsweise einer Schrittverlusterkennung oder einer Überlasterkennung bestimmt werden.

Grundsätzlich wird beim Betrieb des Ventilantriebs hier zwischen verschiedenen Betriebsmodi unterschieden. Es gibt die Möglichkeit den Ventilantrieb zu fahren, wie dies beispielsweise in den Schritten a), c) und e) erfolgt. Dann wirken in dem Ventilantrieb bevorzugt Antriebsströme, welche den Motor dazu veranlassen vorgegebene Schritte durchzuführen oder einen vorgegebenen Weg zurückzulegen, so dass der Ventilschieber sich gemäß der Vorgabe bewegt. Es gibt weiter die Möglichkeit den Ventilantrieb in einer definierten Position zu halten. Dann wirken in dem Ventilantrieb bevorzugt ebenfalls Antriebsströme, die dazu geeignet sind, den Ventilantrieb und damit den Ventilschieber an einer Position zu halten - auch entgegen wirkender äußerer Kräfte, die beispielsweise von der Rückstellfeder oder anderen Kraftquellen auf den Ventilantrieb bzw. den Ventilschieber ausgeübt werden. Darüber hinaus existiert der Betriebsmodus, der in Schritt b) und d) verwendet wird und welcher bewirkt, dass die Rückstellfeder die Bewegung des Ventilschiebers kontrolliert. In diesem Betriebsmodus wird der am Ventilantrieb anliegende Strom so weit reduziert, dass die von der Rückstellfeder ausgeübten Kräfte die von dem Ventilantrieb ausgeübten Kräfte übersteigen, bzw. dass insbesondere die von der Rückstellfeder ausgeübten Kräfte den Ventilschieber in die sichere Position bewegen. Dieser Betriebsmodus kann auch ein "stromloser" Betriebsmodus sein. Dieser Betriebsmodus kann auch ein Betriebsmodus mit deaktiviertem Ventilantrieb sein, in welchem bevorzugt der Ventilantrieb insbesondere gar keine Kräfte auf den Ventilschieber aufbringt. In jedem Fall ist der Strom gegenüber dem "Normalbetrieb" zum Bewegen oder Halten des Ventilschiebers in bestimmte Ventilschieberpositionen reduziert. Von daher umfasst der in Schritt b) und d) hier verwendete Begriff "Reduzierung" für den Strom am Ventilantrieb auch eine mögliche Deaktivierung oder Stromlosschaltung des Ventilantriebs. In diesem Betriebsmodus wird der Ventilantrieb nicht angetrieben. Dann wird die Position des Ventilschiebers von der Rückstellfeder beeinflusst. Gegebenenfalls wirkt sich die Masse des Ventilschiebers und des mit dem Ventilschieber mechanisch gekoppelten Ventilantriebs auf die Geschwindigkeit der mit der Rückstellfeder verursachten Kräfte aus. Der Ventilschieber wird im Betriebsmodus gemäß Schritt b) und d) mit reduziertem Strom am Ventilantrieb bzw. im deaktivierten bzw. stromlosen Betriebsmodus immer in die Nullstellung bewegt.

Besonders vorteilhaft ist es, wenn die Neutralstellung des Ventilschiebers ein Neutralstellungsbereich ist, der sich von einer ersten Neutralstellungsendposition bis zu einer zweiten Neutralstellungsendposition erstreckt, wobei in Schritt b) der Ventilschieber von der Rückstellfeder in die zweite Neutralstellungsendposition gedrückt wird und in Schritt d) der Ventilschieber von der Rückstellfeder in die erste Neutralstellungsendposition gedrückt wird.

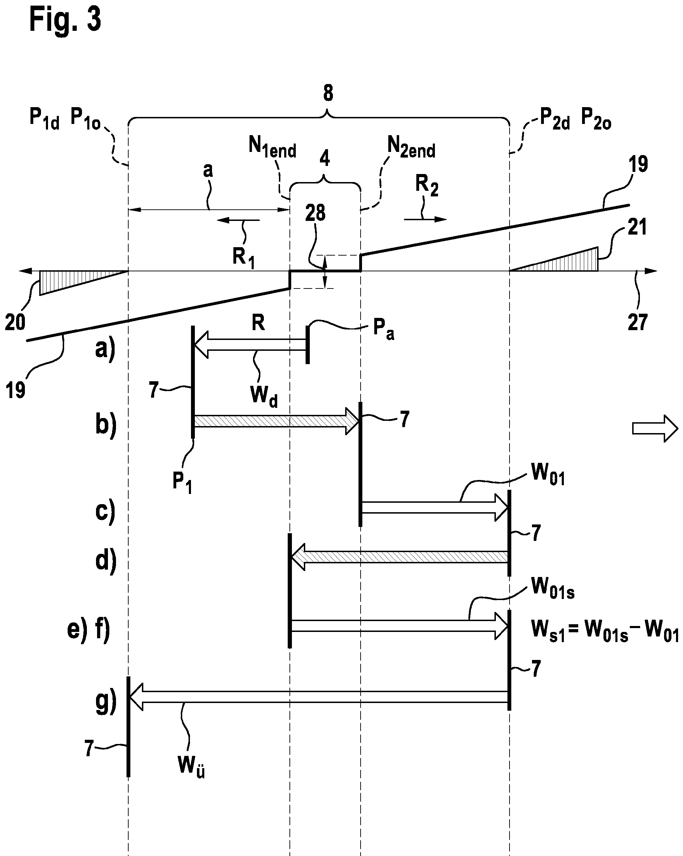

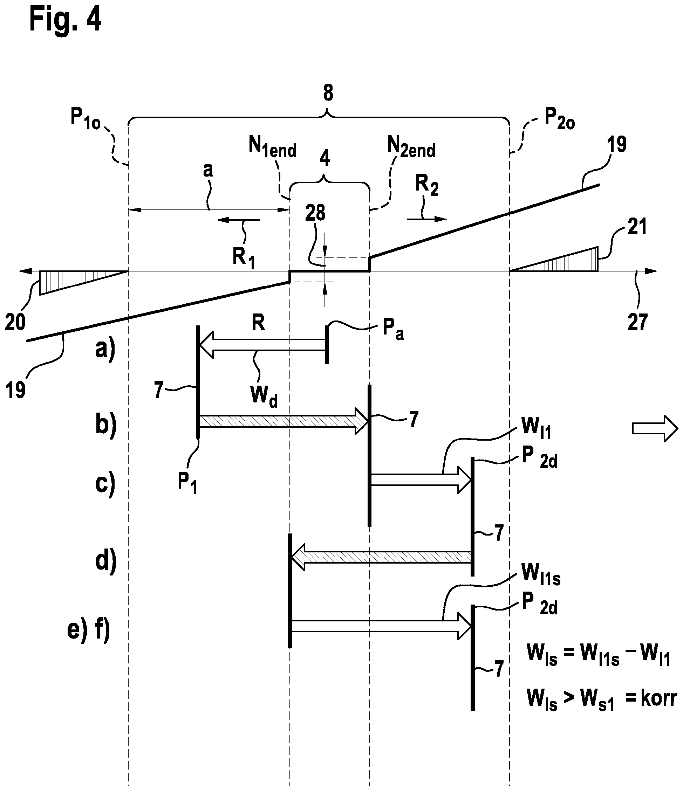

Die Neutralstellung wird bevorzugt aus Sicht des Ventilantriebs bzw. des Schrittmotors beschrieben. Ein Anteil des Spiels zwischen dem Ventilantrieb und dem Ventilschieber spielt sich in der Länge des Neutralstellungsbereichs zwischen den beiden Neutralstellungsendpositionen wieder. Die in dem hier beschriebenen Verfahren zu Grunde gelegte Ventilschieberposition ist aus diesem Grunde nicht unbedingt gleichzusetzen mit einer tatsächlichen (physikalischen) Ventilschieberposition. Die Ventilschieberposition wird vielmehr zumindest teilweise am Ventilantrieb (insbesondere am Schrittmotor) bestimmt und wenn ein Spiel zwischen dem Schrittmotor und dem Ventilschieber auftritt, könnte es gegebenenfalls zu Abweichungen zwischen der tatsächlichen (physikalischen) Ventilschieberposition und der gemessenen und für das hier beschriebene Verfahren zu Grunde gelegten Ventilschieberposition kommen. Dieser Zusammenhang wird nachfolgend noch anhand der Fig. 3 und 4 näher erläutert.

Innerhalb der Neutralstellung wirken bevorzugt keine definierten Kräfte auf den Ventilschieber. Bevorzugt existiert im System allerdings eine gewisse innere Reibung, welche bewirkt, dass der Ventilschieber und/oder der Ventilantrieb bzw. der Schrittmotor innerhalb der Neutralstellung sich nicht völlig unkontrolliert hin- und her bewegt. Die Länge der Neutralstellung entlang der möglichen Ventilschieberpositionen entspricht regelmäßig dem Spiel im System aus Hydraulikventil und Ventilantrieb.

Die Erkenntnis, dass der Ventilschieber dann, wenn er durch die Rückstellfeder in die Neutralstellung gebracht wird, immer an der Neutralstellungsendposition verbleibt, die der Richtung von welcher ausgehend der Ventilschieber in die Neutralstellungsendposition gebracht wird gegenüberliegend ist, ist für das beschriebene Verfahren sehr wichtig. Dies liegt daran, dass die Rückstellfeder den Ventilschieber beschleunigt und innerhalb der Neutralstellung keine (wesentlichen) Widerstände auf den Ventilschieber wirken, so dass der Ventilschieber immer durch die Neutralstellung hindurch bis zur gegenüberliegenden Neutralstellungsendposition gefahren wird.

Außerdem vorteilhaft ist es, wenn die Neutralstellung des Ventilschiebers innerhalb eines Überdeckungsbereichs zwischen zwei Öffnungspunkten des Hydraulikventils angeordnet ist, wobei Hydraulikleitungen des Hydraulikventils geschlossen sind, wenn die Ventilschieberposition innerhalb des Überdeckungsbereichs liegt und eine Öffnung von Hydraulikleitungen an den zwei Öffnungspunkten beginnt.

Bevorzugt hat das System mit dem Hydraulikventil und dem Ventilantrieb einen solchen Überdeckungsbereich. Der Überdeckungsbereich ermöglicht es unter anderem das beim Betrieb des Hydraulikventils sichergestellt wird, dass Hydraulikflüssigkeit entweder an einem ersten Auslass oder an einem zweiten Auslass des Hydraulikventils bereitgestellt wird und beim Überfahren des Überdeckungsbereichs mit dem Ventilschieber sich immer ein ausreichender zeitlicher Abstand zwischen der Bereitstellung der Hydraulikflüssigkeit an dem ersten Auslass und dem zweiten Auslass ergibt bzw. ein Bediener des Hydraulikventils ausgehend von dem Überdeckungsbereich gezielt entweder eine Bereitstellung von Hydraulikflüssigkeit an dem ersten Auslass oder eine Bereitstellung von Hydraulikflüssigkeit an dem zweiten Auslass bewirken kann.

Darüber hinaus vorteilhaft ist es, wenn in Schritt a) eine definierte sichere Wegstrecke gefahren wird, welche kürzer ist als ein Abstand zwischen einer Neutralstellungsendposition und dem entsprechenden Öffnungspunkt des Hydraulikventils.

Hierdurch kann erreicht werden, dass unabhängig von der genauen Position des Ventilschiebers innerhalb der Neutralstellung auf jeden Fall sichergestellt ist, dass das Anfahren der ersten Ventilschieberposition in Schritt a) kein Öffnen des Hydraulikventils bewirkt.

Außerdem vorteilhaft ist es, wenn die in Schritt a) angefahrene erste Position und/oder die angefahrene definierte zweite Position innerhalb des Überdeckungsbereichs des Ventilschiebers angeordnet sind.

Besonders vorteilhaft ist es, wenn der Ventilantrieb einen Schrittmotor aufweist, wobei eine Messung von Wegstrecken in dem Verfahren mit durch ein Zählen von Schritten des Schrittmotors erfolgt.

Bevorzugt ist ein Steuergerät zum Steuern des Schrittmotors dazu eingerichtet während einer Bewegung des Schrittmotors die zurück gelegte Anzahl an Schritten zu zählen.

Darüber hinaus vorteilhaft ist es, wenn die Verfahrensschritte a) bis f) bei einer Erstinbetriebnahme des Systems und/oder bei einer Wiederinbetriebnahme des Systems nach einer Reparatur oder Wartung durchgeführt werden und zumindest das in Schritt f) berechnete Spiel sowie gegebenenfalls auch weitere Werte in einem Steuergerät zum Betrieb des Systems abgelegt werden und anschließend für den Betrieb des Systems zur Verfügung zu stehen.

Bevorzugt sind mit dem beschriebenen Verfahren ermittelten Werte und Parameter insbesondere das in Schritt f) berechnete Spiel. Wenn dieses Spiel einmal ermittelt ist, kann es dauerhaft für jeden Betrieb des Systems verwendet werden, um das Hydraulikventil gezielt anzusteuern und es muss nicht bei jeder Inbetriebnahme neu bestimmt werden.

Das ermittelte Spiel bzw. ein im System hinterlegter Parameter, der dieses Spiel beschreibt, wird bevorzugt in einem dem Verfahren nachfolgenden Betrieb des Systems zusammen mit einer abgespeicherten letzten Bewegungsrichtung des Ventilschiebers verwendet, um das Spiel zu kompensieren. Bevorzugt wird durch einen Vergleich der zuletzt verwendeten Bewegungsrichtung des Ventilschiebersmit der Richtung einer neuen Vorgabe für die Bewegung des Ventilschiebers ein Richtungswechsel erkannt. Wenn ein Richtungswechsel erkannt wurde, kann eine Kompensation des Spiels erfolgen, in dem der Ventilschieber bzw. der Ventilantrieb bzw. der Motor eine zusätzliche Bewegungsvorgabe erhält, welche dem Spiel bzw. dem hinterlegten Parameter für das Spiel entspricht.

Ebenfalls vorteilhaft ist es, wenn die in Schritt c) und Schritt e) angefahrene definierte zweite Position ein Öffnungspunkt des Hydraulikventils ist, der in Schritt c) und Schritt e) anhand von einer hydraulischen Eigenschaft im Hydraulikventil und/oder in einem an das Hydraulikventil angeschlossenen Hydrauliksystem erkannt wird.

Darüber hinaus vorteilhaft ist, wenn nach Schritt e) noch folgender Schritt durchgeführt wird:
g) Fahren des Ventilschiebers in die erste Richtung bis zu einer definierten ersten Position;
wobei die in Schritt c) und Schritt e) angefahrene definierte zweite Position und die in Schritt g) angefahrene definierte erste Position jeweils Öffnungspunkte des Hydraulikventils sind, die in den Schritten c), e) und g) anhand einer hydraulischen Eigenschaft im Hydraulikventil und/oder in einem an das Hydraulikventil angeschlossenen Hydrauliksystem erkannt werden.

Bevorzugt werden die Öffnungspunkte in einem Steuergerät ebenfalls als Parameter und Werte hinterlegt, die für den Betrieb des Systems verwendet werden können. Durch die Ermittlung beider Öffnungspunkt kann ebenfalls die Gesamtlänge der Überdeckung als Weg (Anzahl von Schritten bestimmt werden).

Im Ergebnis liefert das Verfahren bevorzugt ein virtuelles Modell des Ventils bestehend aus den Informationen betreffend die Überdeckung, das Spiel, die Öffnungspunkte und die Neutralstellungsendpositionen.

Außerdem vorteilhaft ist es, wenn die in Schritt c) und Schritt e) angefahrene definierte zweite Position durch eine Federkraft der Rückstellfeder des Hydraulikventils definiert ist, wobei die Federkraft in Schritt c) und in Schritt e) im Ventilantrieb erkannt wird.

Bevorzugt liegt auch die definierte zweite Position innerhalb der Überdeckung. Die Federkraft der Rückstellfeder steigt ausgehend von der Neutralstellung bevorzugt linear mit dem Abstand von der Neutralstellung, und zwar insbesondere mit dem Abstand von der jeweils nächstliegenden Neutralstellungsendposition der Neutralstellung. Die Federkraft kann im Ventilantrieb beispielsweise anhand von einem elektrischen Strom bestimmt werden, die zum Halten des Ventilschiebers in der definierten Position erforderlich ist. Bevorzugt ist der elektrische Strom zum Halten ebenfalls proportional zur Federkraft. Aus diesem Grund kann anhand eines definierten elektrischen Haltestroms eine definierte zweite Position festgelegt sein.

Darüber hinaus vorteilhaft ist es, wenn die in Schritt c) und Schritt e) angefahrene definierte zweite Position erkannt wird, in dem der Ventilantrieb mit einem reduzierten Antriebsstrom angesteuert wird und eine mit diesem Antriebsstrom erreichbare Ventilschieberposition die definierte zweite Position ist.

Außerdem vorteilhaft ist es, wenn die in Schritt c) und Schritt e) angefahrene definierte zweite Position an dem Auftreten eines Schrittverlustes erkannt wird, welcher an einem Schrittmotor des Ventilantriebs auftritt und welcher mit einer dafür in einem Steuergerät des Ventilantriebs eingerichteten Schrittverlusterkennung erkannt wird.

Die Schrittverlusterkennung ist beispielsweise aus dem genannten Dokument des Standes der Technik EP 3 142 244 B1 bekannt. Die Schrittverlusterkennung ermöglicht es bei einem definierten Antriebsstrom eine Position des Ventilschiebers zu erkennen - insbesondere, wenn ein Antriebsstrom des Ventilantriebs bzw. des Schrittmotors so weit reduziert ist, dass die Federkraft an einer innerhalb der Überdeckung liegenden Position nicht mehr überwunden werden kann. Sobald bei der Bewegung des Ventilschiebers mit dem Ventilantrieb ein Schrittverlust auftritt, ist die durch den reduzierten Antriebsstrom definierte zweite Position erreicht.

Besonders bevorzugt ist es, wenn die Verfahrensschritte a) bis f) bei einer erneuten Inbetriebnahme des Systems nach einer Erstinbetriebnahme des Systems und/oder nach einer Wiederinbetriebnahme des Systems nach einer Reparatur oder Wartung durchgeführt werden und mit den Verfahrensschritten a) bis f) ermittelte Parameter mit in einem Steuergerät abgelegten Parametern verglichen werden, die bei einer vorherigen Durchführung der Verfahrensschritte a) bis f) ermittelt wurden, und basierend auf diesem Vergleich ein Verschleiß des Systems aus Hydraulikventil und Ventilantrieb und insbesondere ein Verschleiß eines Getriebes zur mechanischen Kopplung eines Schrittmotors in dem Ventilantrieb mit dem Ventilschieber bestimmt wird.

Insbesondere kann ein Verschleiß festgestellt werden, wenn ein gemessenes Spiel sich vergrößert. Gegebenenfalls kann eine Vergrößerung des Spiels über eine Lebenszeit des Hydraulikventils hinweg akzeptabel sein, wenn diese in einem Toleranzbereich liegt. Die Veränderung des Spiels über die Lebenszeit des Hydraulikventils kann mit dem beschriebenen Verfahren systematisch überwacht werden, um eine Online-Diagnose des Hydraulikventils durchzuführen. Bei unerwarteten Vergrößerungen des ermittelten Spiels kann ein Fehler oder ein Fehlverhalten des Systems erkannt werden.

Ebenfalls kann eine nicht erwartbare Verkleinerung des Spiels erkannt werden. Normalerweise ist davon auszugehen, dass das Spiel sich allenfalls vergrößert.

Hier auch beschrieben werden soll ein System aufweisend ein Hydraulikventil und einen Ventilantrieb, welches zur Durchführung des beschriebenen Verfahrens eingerichtet ist.

Ein solches System ist insbesondere dadurch gekennzeichnet, dass der Ventilschieber durch eine entsprechende doppelt eingespannte Rückstellfeder verspannt ist, welche eine Bewegung des Ventilschiebers hervorruft, wie sie für die Durchführung der Schritt b) und d) des Verfahrens erforderlich ist, wenn der Strom am Ventilantrieb entsprechend reduziert wird oder der Ventilantrieb deaktiviert wird bzw. stromlos geschaltet wird.

Außerdem beschrieben werden soll ein Steuergerät für ein beschriebenes System, welches zur Durchführung des beschriebenen Verfahrens mit dem beschriebenen Hydraulikventil eingerichtet ist.

Auf einem solchen Steuergerät ist insbesondere ein Computerprogramm hinterlegt, welches zur Durchführung des beschriebenen Verfahrens geeignet ist.

Es soll darauf hingewiesen werden, dass die im Zusammenhang mit dem vorstehend beschriebenen Verfahren geschilderten besonderen Vorteile und Ausgestaltungsmerkmale auch auf das beschriebene System und das beschriebene Steuergerät zum Betrieb eines Systems anwendbar und übertragbar sind.

Hier ebenfalls noch beschrieben werden soll ein Verfahren zum Betrieb eines Systems aufweisend ein Hydraulikventil und einen Ventilantrieb zum Antrieb des Hydraulikventils, wobei ein Spiel zwischen dem Ventilantrieb und dem Ventilschieber existiert, wobei in einem Steuergerät zur Steuerung der Betätigung des Ventilschiebers zumindest eine letzte Antriebsrichtung und das Spiel als Variablen hinterlegt sind und bei einer Betätigung des Ventilschiebers mit dem Ventilantrieb berücksichtigt werden.

Die Erfindung sowie das technische Umfeld der Erfindung werden nachfolgend anhand der Figuren näher erläutert. Die Figuren zeigen bevorzugte Ausführungsbeispiele, auf welche die Erfindung nicht beschränkt ist. Es ist insbesondere darauf hinzuweisen, dass die Figuren und insbesondere die in den Figuren dargestellten Größenverhältnisse nur schematisch sind. Es zeigen:
- Fig.1:: schematisch ein System bestehend aus Hydraulikventil und Ventilantrieb;
- Fig. 2a, 2b und 2c:: einen Ventilschieber mit Rückstellfeder bei verschiedenen Ventilschieberpositionen:
- Fig. 3:: ein erstes Ablaufdiagramm des beschriebenen Verfahrens; und
- Fig. 4: ein zweites Ablaufdiagramm des beschriebenen Verfahrens.

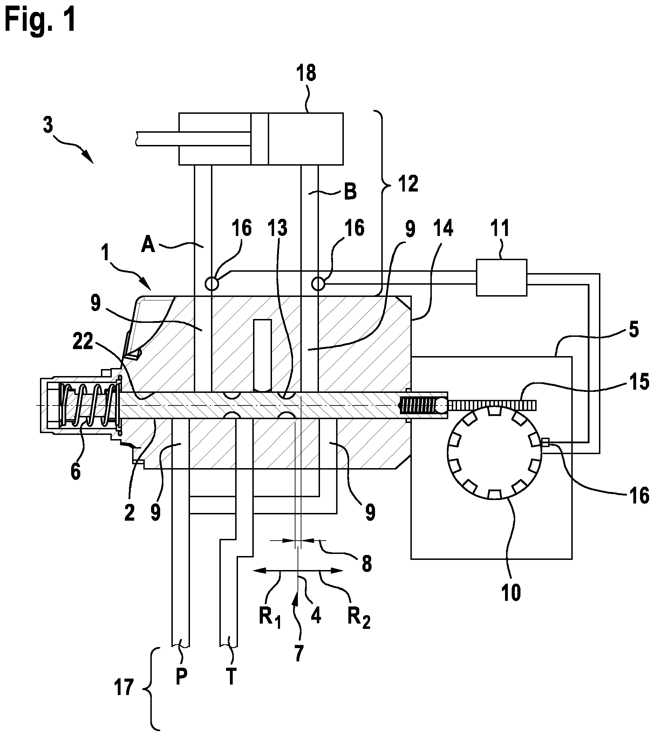

Fig. 1 zeigt schematisch ein System 3 aufweisend ein Hydraulikventil 1 und einen Ventilantrieb 5 zum Antrieb des Hydraulikventils 1. Das Hydraulikventil 1 hat bevorzugt einen ersten Auslass A und einen zweiten Auslass B und es ist insbesondere dazu eingerichtet wahlweise am ersten Auslass A oder am zweiten Auslass B unter Druck stehende Hydraulikflüssigkeit bereitzustellen und dann an dem jeweils anderen Auslass B, A wieder aufzunehmen und zurück zu einem (hier nicht dargestellten) Tank zu leiten. Das Hydraulikventil 1 hat bevorzugt einen Druckanschluss P, an welchem dem Hydraulikventil 1 unter Druck stehende Hydraulikflüssigkeit von einer Hydraulikversorgung 17 bereitgestellt wird. Das Hydraulikventil 1 hat darüber hinaus bevorzugt einen Tankanschluss T, an welchen aus dem jeweils anderen Auslass B, A zurückströmende Hydraulikflüssigkeit abgegeben werden kann.

Das Hydraulikventil 1 hat bevorzugt einen Ventilblock 14, in welchem Hydraulikleitungen 9 bspw. als Bohrungen vorgesehen sind sowie einen Ventilschieber 2, der in einer Steuerbohrung 22 in einer axialen Richtung hin- und her bewegt werden kann und dort verschiedene Ventilschieberpositionen 7 einnehmen kann. An dem Ventilschieber 2 sind bevorzugt Steuerstrukturen 13 vorgesehen, die bspw. als Aussparungen ausgeführt sein können und die je nach Ventilschieberposition 7 Durchlässe zwischen einzelnen Hydraulikleitungen 9 herstellen oder verschließen und so die Bereitstellung von Hydraulikflüssigkeit an den Auslässen A, B steuern.

Bevorzugt sind der Ventilschieber 2, die daran ausgebildeten Steuerstrukturen 13 und die Hydraulikleitungen 9 so ausgebildet, dass bei einer Bewegung des Ventilschiebers 2 in eine erste Richtung R1 ein erster Auslass A ab einem (hier nicht explizit dargestellten ersten Öffnungspunkt) sich öffnet und bei einer weiteren Bewegung in Richtung R1 dann immer weiter geöffnet wird, um einen bereitgestellten Volumenstrom an Hydraulikflüssigkeit an dem ersten Auslass A mit Hilfe der Ventilschieberposition 7 einstellen zu können. Bevorzugt sind der Ventilschieber 2, die daran ausgebildeten Steuerstrukturen 13 und die Hydraulikleitungen 9 weiter so ausgebildet, dass bei einer Bewegung des Ventilschiebers 2 in eine zweite Richtung R2 ein zweiter Auslass B ab einem (hier nicht explizit dargestellten ersten Öffnungspunkt) sich öffnet und bei einer weiteren Bewegung in Richtung R2 dann immer weiter geöffnet wird, um einen bereitgestellten Volumenstrom an Hydraulikflüssigkeit an dem zweiten Auslass B mit Hilfe der Ventilschieberposition 7 einstellen zu können.

Bevorzugt sind der Ventilschieber 2, die daran ausgebildeten Steuerstrukturen 13 und die Hydraulikleitungen 9 so ausgebildet, dass zwischen den Ventilschieberpositionen 7 an dem ersten Öffnungspunkt und an dem zweiten Öffnungspunkt ein Überdeckungsbereich 8 existiert. Bei Ventilschieberpositionen 7 innerhalb dieses Überdeckungsbereichs 8 sind bevorzugt beide Auslässe A und B geschlossen und es wird an keinem der Auslässe A, B Hydraulikflüssigkeit bereitgestellt.

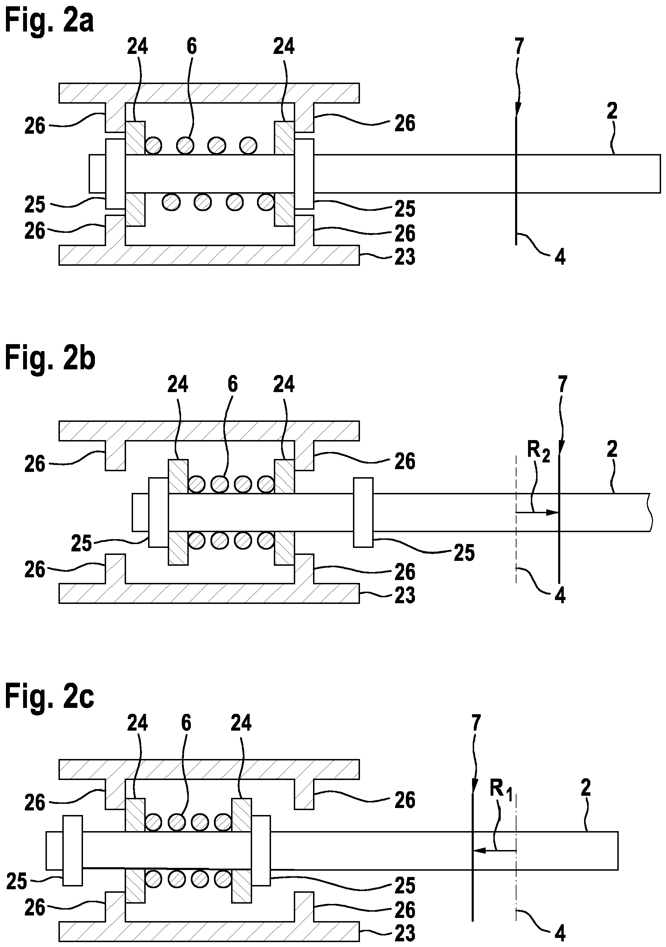

Bevorzugt ist der Ventilschieber 2 mit einer Rückstellfeder 6 verspannt. Die Rückstellfeder 6 ist bevorzugt so eingerichtet, dass der Ventilschieber 2 aus jeder beliebigen Ventilschieberposition 7 von der Feder zurück in eine Neutralstellung 4 bewegt wird, wenn der Ventilantrieb 5 nicht angetrieben bzw. stromlos ist. Die Rückstellfeder 6 ist bevorzugt doppelt eingespannt und schiebt den Ventilschieber 2 durch Auslenken in beide Richtungen R1, R2 zurück in die Neutralstellung 4. Die genaue Funktionsweise der Rückstellfeder 6 wird nachfolgend anhand der Figuren 2a, 2b und 2c noch näher erläutert.

Das System 3 mit dem Hydraulikventil 1 und dem Ventilantrieb 5 dient beispielsweise dazu, ein Hydrauliksystem 12 mit Hydraulikflüssigkeit aus der Hydraulikversorgung 17 zu versorgen. Das Hydrauliksystem 12 kann beispielsweise einen Differentialzylinder 18 umfassen, dessen Kammer an die Anschlüsse A und B angeschlossen sein können. Dann kann der Differentialzylinder 18 mit dem System 3 gesteuert werden.

Der Ventilantrieb 5 ist bevorzugt an den Ventilschieber 2 angeschlossen und dazu eingerichtet den Ventilschieber 2 zu betätigen. Der Ventilantrieb 5 kann beispielsweise einen Schrittmotor 10 aufweisen, der über ein Getriebe 15 eine Linearbewegung erzeugt, die auf den Ventilschieber 2 übertragen wird. Das Getriebe 15 kann beispielsweise eine (hier schematisch angedeutete) Zahnstange und Zahnräder umfassen. Ein Spiel in dem Ventilantrieb 5 bzw. zwischen dem Ventilantrieb 5 und dem Ventilschieber 2 ist beispielsweise durch Toleranzen innerhalb des Getriebes 15 und insbesondere beispielhaft durch Toleranzen zwischen Zahnstangen und Zahnrädern des Getriebes 15 bedingt.

Bevorzugt weist das System 3 ein Steuergerät 11 auf, welches an den Schrittmotor 10 angeschlossen ist und welches zur Betätigung des Schrittmotors 10 diesen ansteuert. Das Steuergerät 11 ist bevorzugt dazu eingerichtet den Betrieb des Ventilantriebs 5 zu überwachen. Dazu können im Ventilantrieb 5 Sensoren 16 vorgesehen sein, die an das Steuergerät 11 angeschlossen sind. Das Steuergerät 11 ist bevorzugt auch dazu eingerichtet den Betrieb des Hydraulikventils 1 zu überwachen. Dazu können bspw. an dem Auslässen A, B Sensoren 16 vorgesehen sein, die an das Steuergerät 11 angeschlossen sind.

Für die Funktionsweise des beschriebenen Verfahrens sind die Ventilschieberposition 7 und die Auswirkung der Rückstellfeder 6 auf die Ventilschieberposition 7 sehr relevant. Sie werden anhand der Figuren 2a, 2b und 2c hier etwas erläutert. Die Fig. 2a, 2b und 2c zeigen jeweils die doppelte Einspannung des Ventilschiebers 2 mit der Rückstellfeder 6. Der Ventilschieber 2 hat bevorzugt zwei Absätze 25 die mit der Rückstellfeder 6 in einer Einspannvorrichtung 23 eingespannt sind. Besonders bevorzugt existieren bewegliche Übertragungselement 24, die von der Rückstellfeder 6 jeweils gegen die Absätze 25 und den Gegenhaltestrukturen 26 der Einspannvorrichtung 23 gedrückt werden

In Fig. 2a ist der Ventilschieber 2 in einer Neutralstellung 4 gezeigt. Die Ventilschieberposition 7 entspricht hier der Neutralstellung 4. Die Rückstellfeder 6 steht unter Spannung und spannt den Ventilschieber 2 bzw. dessen Absätze 25 in beide Richtungen mit einer Vorspannkraft ein.

In Fig. 2b ist nun eine Auslenkung der Ventilschieberposition 7 in die zweite Richtung R2 dargestellt. In Fig. 2c ist eine Auslenkung der Ventilschieberposition 7 in die erste Richtung R1 dargestellt. Aufgrund der Art der Einspannvorrichtung 23 wird die Rückstellfeder 6 in beide Richtungen R1, R2 gleichermaßen zusammengedrückt und es entsteht eine Federkraft, die den Ventilschieber 2 zurück in die Neutralstellung 4 gemäß Fig. 2a treibt.

In den Fig. 3 und 4 sind nun zwei verschiedene Ausführungsvarianten des beschriebenen Verfahrens dargestellt, wobei die Ausführungsvariante gemäß Fig. 3 bspw. bei einer Erstinbetriebnahme des Systems 3 oder bei einer Wiederinbetriebnahme nach einer Wartung oder Reparatur durchgeführt wird und wobei die Ausführungsvariante gemäß Fig. 4 bspw. als Initialisierungsfunktion bei jeder beliebigen Inbetriebnahme (nach einer Erstinbetriebnahme) durchgeführt werden kann. Hier werden zunächst gemeinsame Aspekte der Fig. 3 und 4 erläutert. Dann wird die Fig.3 erläutert und anschließend wird bei der Erläuterung der Fig. 4 auf die Erläuterungen zur Fig. 3 aufgebaut.

Die Fig. 3 und 4 zeigen jeweils aufgetragen auf einer Ventilschieberpositionsachse 27 die Ventilschieberpositionen 7 vor und nach der jeweiligen Durchführung der einzelnen Verfahrensschritte des Verfahrens, wobei die einzelnen Verfahrensschritte jeweils Bewegungen des Ventilschiebers 2 umfassen, die als Pfeile aufgetragen sind. Die Abfolge der Verfahrensschritte a) bis g) ist jeweils untereinander dargestellt. Im oberen Teil der Fig. 3 und 4 ist jeweils schematisch eine Kennlinie der Federkraft 19 der Rückstellfeder 6 über die Ventilschieberposition 7 aufgetragen. Darüber hinaus ist über die Ventilschieberposition 7 schematisch ein erster Volumenstrom 20 bzw. ein zweiter Volumenstrom 21 aufgetragen, der sich an den Auslässen des Hydraulikventils 1 bei einer bestimmten Ventilschieberposition 7 einstellt. Zu erkennen sind ein erster Öffnungspunkt P₁ₒ, ab welchem ein erster Volumenstrom 20 bereitgestellt wird und ein zweiter Öffnungspunkt P₂ₒ, ab welchem ein zweiter Volumenstrom 21 bereitgestellt wird. Zwischen dem ersten Öffnungspunkt P₁ₒ, und dem zweiten Öffnungspunkt P₂ₒ, existiert ein Überdeckungsbereich 8. Bei vorliegenden Ventilschieberpositionen 7 innerhalb dieses Überdeckungsbereichs 8 werden keine Volumenströme 20, 21 von Hydraulikflüssigkeit bereitgestellt. Innerhalb des Überdeckungsbereichs 8 existiert eine Neutralstellung 4.

Betreffend die Neutralstellung 4 ist darauf hinzuweisen, dass die Diagramme gemäß Fig. 3 und 4 Ventilschieberpositionen 7 jeweils aus Sicht des Ventilantriebs 5 darstellen. Wie gemäß den Fig. 2a bis 2c erkennbar ist, ist der Ventilschieber 7 mit der Rückstellfeder 6 bevorzugt definiert und spielfrei eingespannt. Die Neutralstellung 4 ist daher in der Theorie und aus Sicht des Ventilschiebers 2 selbst bevorzugt eine diskrete, bestimmte Ventilschieberposition 7. Aufgrund von Elastizitäten im System 3, Toleranzen und ggf. aufgrund eines Spiels im Ventilantrieb 5 ergibt sich jedoch ein Spiel des Systems 3, welches dazu führt, dass die Neutralstellung 4 aus Sicht des Ventilantriebs 5 ein Ventilschieberpositionsbereich ist, welcher sich von einer ersten Neutralstellungsendposition N_{1end} bis zu einer zweiten Neutralstellungsendposition N_{2end} erstreckt. Die Kennlinie der Federkraft 19 ist hier ebenfalls aus Sicht des Ventilantriebs 5 dargestellt. Zu erkennen ist, dass die Federkraft 19 jeweils bei den Neutralstellungsendpositionen N_{1end} und N_{2end} beginnt zu wirken. Durch die doppelte Einspannung der Rückstellfeder 6 gemäß Fig. 2a ergibt sich die Vorspannkraft 28 der Federkraft 19, die an den Neutralstellungsendpositionen N_{1end} und N_{2end} überwunden werden muss. Ab dort steigt die Federkraft 19 bei weiterer Auslenkung bevorzugt linear bzw. proportional zur Auslenkung weiter an.

Gemäß Fig. 3 wird zunächst in Schritt a) der Ventilschieber 2 in eine erste Richtung R₁ bewegt und diese Richtung R₁ wird bevorzugt abgespeichert. Bevorzugt ist die Bewegung die der Ventilschieber 2 in Schritt a) macht durch ihre Länge fest definiert. Es handelt sich also bevorzugt um eine definierte Wegstrecke W_{d}, die beispielsweise durch eine feste Anzahl von Schritten eines Schrittmotors 10 des Ventilantriebs 5 definiert sein kann. Die Ausgangsposition Pₐ vor Beginn von Schritt a) ist nicht genau bekannt. Da das Ventil vor Schritt a) bevorzugt stromlos war, muss sie innerhalb der Neutralstellung 4 liegen. Es ist aber nicht genau bekannt, wo innerhalb der Neutralstellung. 4 die Ausgangsposition Pₐ liegt. Die Länge der definierte Wegstrecke W_{d} ist bevorzugt so festgelegt, dass sie auf jeden Fall länger ist als die Neutralstellung 4, so dass der Ventilschieber 2 auf jeden Fall aus der Neutralstellung 4 heraus gefahren wird und darüber hinaus bevorzugt auf jeden Fall kürzer als ein Abstand a zwischen der jeweiligen Neutralstellungsendpositionen N_{1end}, N_{2end} und dem in der jeweiligen Richtung R1 dann folgenden Öffnungspunkt P₁ₒ. So kann sichergestellt werden, dass das Ventil hier auch nicht ungewollt geöffnet wird. Das Ergebnis der Bewegung des Ventilschiebers 2 in Schritt a) ist, dass der Ventilschieber 2 sich in einer ersten Ventilschieberposition P1 zwischen dem Öffnungspunkt P₁ₒ und den Neutralstellungsendpositionen N_{1end}, N_{2end} befindet.

Anschließend wird in Schritt b) der Ventilantrieb 5 deaktiviert bzw. auf stromlos geschaltet bzw. der am Ventilantrieb 5 anliegende Strom wird entsprechend reduziert. Infolgedessen bewegt die Rückstellfeder 6 den Ventilschieber 2 entgegen der ersten Richtung R₁ in die zweite Richtung R₂ zurück in die Neutralposition. Aufgrund ihrer Vorspannung beschleunigt die Rückstellfeder 6 den Ventilschieber 2 so stark, dass der Ventilschieber 2 durch die Neutralstellung 4 komplett durchgeschoben wird und innerhalb der Neutralstellung 4 in die zweite Neutralstellungsendpositionen N_{2end} gelangt. Ab der ersten Neutralstellungsendposition N_{1end} wirken im Vergleich zur Federkraft 19 der Rückstellfeder 6 nur relativ kleine Reibungskräfte auf den Ventilschieber 2, so dass die Bewegung des Ventilschiebers 2 durch die Neutralstellung 4 sehr zuverlässig erfolgt. An der zweiten Neutralstellungsendposition N_{2end} wirkt dann die Vorspannkraft 28 der Rückstellfeder 6, die den Ventilschieber 2 dort zuverlässig stoppt. Der Ventilschieber 2 befindet sich nach Schritt b) also zuverlässig in der zweiten Neutralstellungsendposition N_{2end}.

In Schritt c) wird der Ventilschieber 2 nun in der Richtung R2 bewegt bis zu einer definierten zweiten Ventilschieberposition P_{2d}. Diese definierte zweite Ventilschieberposition P_{2d} muss zuverlässig bestimmbar sein. Dies kann auf verschiedene Arten erfolgen. Hierwird vorgeschlagen als definierte zweite Ventilschieberposition P_{2d} einen zweiten Öffnungspunkt P₂ₒ des Hydraulikventils 1 zu verwenden. Der zweiten Öffnungspunkt P₂ₒ kann beispielsweise daran zuverlässig erkannt werden, dass ein Druck an einem Anschluss des Hydraulikventils 1 auftritt, oder es kann ein Schwellwert für einen (geringen) Volumenstrom an Hydraulikflüssigkeit an dem jeweiligen Anschluss als Öffnungspunkt definiert sein. Die Ventilschieberposition 7 wird während der Durchführung von Schritt c) aktiv überwacht und eine Bewegung des Ventilschiebers 2 in Schritt c) wird gestoppt, sobald die definierte zweite Ventilschieberposition P_{2d} erreicht wurde. Eine während Schritt c) zurück gelegte ersten Wegstrecke W₁ des Ventilschiebers 2 wird ermittelt. Das heißt diese Wegstrecke wird gemessen und in einem Steuergerät 11 abgespeichert. In dem Fall, dass der Ventilantrieb 5 einen Schrittmotor 10 aufweist, kann dies beispielsweise geschehen, in dem die Schritte des Schrittmotors 10 von der zweiten Neutralstellungsendpositionen N_{2end} zu der definierten zweiten Ventilschieberposition P_{2d} abgespeichert werden.

Anschließend wird in Schritt d) der Ventilantrieb 5 wieder deaktiviert bzw. wieder auf stromlos geschaltet bzw. der am Ventilantrieb 5 anliegende Strom wird entsprechend reduziert. Infolgedessen bewegt die Rückstellfeder 6 den Ventilschieber 2 entgegen in der Richtung R₁ zurück in die Neutralposition. Aufgrund ihrer Vorspannung beschleunigt die Rückstellfeder 6 den Ventilschieber 2 so stark, dass der Ventilschieber 2 durch die Neutralstellung 4 komplett durchgeschoben wird und innerhalb der Neutralstellung 4 in die erste Neutralstellungsendposition N_{1end} gelangt. Ab der ersten Neutralstellungsendposition N_{2end} wirken im Vergleich zur Federkraft 19 der Rückstellfeder 6 nur relativ kleine Reibungskräfte auf den Ventilschieber 2, so dass die Bewegung des Ventilschiebers 2 durch die Neutralstellung 4 sehr zuverlässig erfolgt. An der ersten Neutralstellungsendposition N_{1end} wirkt dann die Vorspannkraft 28 der Rückstellfeder 6, die den Ventilschieber 2 dort zuverlässig stoppt. Der Ventilschieber 2 befindet sich nach Schritt d) also zuverlässig in der zweiten Neutralstellungsendposition N_{1end}.

In Schritt e) wird der Ventilschieber 2 nun in der Richtung R2 bewegt bis zu der definierten zweiten Ventilschieberposition P_{2d}. Aufgrund der Tatsache, dass diese definierte zweite Ventilschieberposition P_{2d} zuverlässig bestimmbar ist, kann diese genauso angefahren werden wie schon in Schritt c). Die Ventilschieberposition 7 wird während der Durchführung von Schritt e) ebenfalls aktiv überwacht und eine Bewegung des Ventilschiebers 2 in Schritt e) wird gestoppt, sobald die definierte zweite Ventilschieberposition P_{2d} erreicht wurde. Eine während Schritt e) zurück gelegte zweite Wegstrecke W₁ₛ des Ventilschiebers 2 wird ermittelt. Das heißt diese Wegstrecke wird gemessen und in einem Steuergerät 11 abgespeichert. In dem Fall, dass der Ventilantrieb 5 einen Schrittmotor 10 aufweist, kann dies beispielsweise geschehen, in dem die Schritte des Schrittmotors 10 von der zweiten Neutralstellungsendposition N_{1end} zu der definierten zweite Ventilschieberposition P_{2d} abgespeichert werden.

Nun liegen die zweite Wegstrecke W₁ₛ und die erste Wegstrecke W₁ als Werte vor. Es kann in Schritt f) das Spiel Wₛ als Differenz der zweiten Wegstrecke W₁ₛ und der ersten Wegstrecke W₁ berechnet werden.

Als weitere Verbesserung des beschriebenen Verfahrens ist in Fig. 3 auch noch dargestellt, dass nach Schritt f) als Schritt g) der Ventilschieber 2 auch noch zurück bis zu einer ersten definierten Position gefahren werden kann, die bevorzugt einem ersten Öffnungspunkt P₁ₒ des Hydraulikventils 1 entspricht. Bevorzugt kann der erste Öffnungspunkt P₁ₒ genauso festgestellt werden wie der zweite Öffnungspunkt P₂ₒ. In Schritt g) überfährt der Ventilschieber 2 den kompletten Überdeckungsbereich 8 und legt die Überdeckungswegstrecke W_{ü} zurück. Die Überdeckungswegstrecke W_{ü} wird während der Durchführung des Verfahrens bevorzugt ebenfalls bestimmt. Der erste Öffnungspunkt P₁ₒ und der zweite Öffnungspunkt P₂ₒ werden bevorzugt in einem Steuergerät 11 abgespeichert und sie stehen bevorzugt für den Betrieb des Systems 3 mit dem Hydraulikventil 1 und dem Ventilantrieb 5 zur Verfügung.

Die in Fig. 4 dargestellte angepasste Ausführungsvariante des beschriebenen Verfahrens entspricht im Wesentlichen der Verfahrensführung gemäß Fig. 3. Der wesentliche Unterschied ist, dass die definierte zweite Ventilschieberposition P_{2d}, die in den Schritten c) und e) jeweils angefahren wird hier nicht mit dem zweiten Öffnungspunkt P₂ₒ zusammenfällt, sondern davon abweicht und bevorzugt in zweiter Richtung R₂ sich noch davor (innerhalb des Überdecksbereichs 8) befindet. Eine solche definierte zweite Ventilschieberposition P_{2d}, kann beispielsweise durch eine definierte Federkraft 19 der Rückstellfeder 8 gekennzeichnet sein. Eine solche definierte zweite Ventilschieberposition P_{2d} kann beispielsweise gezielt angefahren werden, in dem der Ventilantrieb 5 bzw. ein Schrittmotor 10 des Ventilantriebs 5 mit einem reduzierten Antriebsstrom angetrieben wird. Besonders bevorzugt kann eine Schrittverlusterkennung eines Schrittmotors 10 eingesetzt werden, um eine solche definierte zweite Ventilschieberposition P_{2d} zu festzustellen.

Ein Vorteil der Verwendung einer solchen definierten zweiten Ventilschieberposition P_{2d}, gegenüber der definierten zweite Ventilschieberposition P_{2d}, als zweiter Öffnungspunkt P₁ₒ gemäß Fig. 3, ist bspw., dass eine Spielerkennung möglich ist, ohne dass tatsächlich Volumenströme von Hydraulikflüssigkeit an dem Hydraulikventil 1 auftreten. Aus diesem Grund eignet sich diese Ausführungsvariante des Verfahrens beispielsweise besonders für eine Initialisierungsfunktion zur Initialisierung eines Systems 3 aus Hydraulikventil 1und Ventilantrieb 5 bei jeder Inbetriebnahme.

Gemäß einer besonders bevorzugten Ausführungsvariante kann ein bei einer Erstinbetriebnahme (gemäß Fig. 3) ermitteltes Spiel W₁ₛ anschließend auch noch mit einem bei einer beliebigen Inbetriebnahme nach Initialisierung (gemäß Fig. 4) ermittelten Spiels W_{Is}, miteinander verglichen werden. Sofern das Spiel größer geworden ist (W_{Is}>W₁ₛ) kann davon ausgegangen werden, dass ein Verschleiß aufgetreten ist. Sofern dieser Verschleiß in einem vorgesehenen Rahmen liegt, können hinterlegte Parameter für den Betrieb des Systems 3 angepasst werden und der weitere Betrieb des Systems 3 kann wie vorgesehen erfolgen. Sofern ein kleineres Spiel als bei der Erstinbetriebnahme festgestellt wurde (W_{Is} <W₁ₛ), kann gegebenenfalls auch eine Fehlermeldung ausgegeben werden, weil eine Reduzierung des vorhandenen und zuvor bestimmten Spiels nicht auftreten kann.

Mit dem hier beschriebenen Verfahren wurde ein neuartiger und sehr effizienter Ansatz zur Ermittlung des Spiels in Systemen 3 aufweisend Hydraulikventil 1und Ventilantrieb 5 beschrieben.

### Bezugszeichenliste

- 1: Hydraulikventil
- 2: Ventilschieber
- 3: System
- 4: Neutralstellung
- 5: Ventilantrieb
- 6: Rückstellfeder
- 7: Ventilschieberposition
- 8: Überdeckungsbereich
- 9: Hydraulikleitung
- 10: Schrittmotor
- 11: Steuergerät
- 12: Hydrauliksystem
- 13: Steuerstruktur
- 14: Ventilblock
- 15: Getriebe
- 16: Sensoren
- 17: Hydraulikversorgung
- 18: Differentialzylinder
- 19: Federkraft
- 20: erster Volumenstrom
- 21: zweiter Volumenstrom
- 22: Steuerbohrung
- 23: Einspannungsvorrichtung
- 24: Übertragungselement
- 25: Absatz
- 26: Gegenhaltestrukturen
- 27: Ventilschieberpositionsachse
- 28: Vorspannkraft

- R₁: erste Richtung
- R₂: zweite Richtung
- P₁: ersten Ventilschieberposition
- P_{1d}: definierte erste Ventilschieberposition
- P_{2d}: definierte zweite Ventilschieberposition
- Pₐ: Ausgangsposition
- W₁: erste Wegstrecke
- W₁ₛ: zweite Wegstrecke
- Wₛ: Spiel
- W_{ü}: Überdeckungswegstrecke
- W_{d}: definierte Wegstrecke

- A: erster Auslass
- B: zweiter Auslass
- P: Druckanschluss
- T: Tankanschluss

- N_{1end}: erste Neutralstellungsendposition
- N_{2end}: zweite Neutralstellungsendposition
- P₁ₒ: erster Öffnungspunkt
- P₂ₒ: zweiter Öffnungspunkt
- a: Abstand

## Patentansprüche

1. Verfahren zum Erkennen eines mechanischen Spiels (Wₛ) in einem System (3) aufweisend ein Hydraulikventil (1) und einen Ventilantrieb (5) zum Antrieb des Hydraulikventils (1), wobei ein von dem Ventilantrieb (5) angetriebener Ventilschieber (2) des Hydraulikventils (1) mit mindestens einer Rückstellfeder (6) eingespannt ist, welche dazu eingerichtet ist, den Ventilschieber (2) bei einem stromlosen Ventilantrieb (5) aus jeder beliebigen Ventilschieberposition (7) zurück in eine Neutralstellung (4) des Ventilschiebers (2) zu schieben, aufweisend die folgenden Schritte:
a) Fahren des Ventilschiebers (2) mit dem Ventilantrieb (5) in eine erste Richtung (R₁) bis zu einer ersten Ventilschieberposition (P₁) außerhalb einer Neutralstellung (4);
b) Reduzieren des Stroms am Ventilantrieb (5), so dass der Ventilschieber (2) von der Rückstellfeder (6) in einer zweiten Richtung (R₂) entgegengesetzt zur ersten Richtung (R₁) zurück in die Neutralstellung (4) bewegt wird;
c) Fahren des Ventilschiebers (2) mit dem Ventilantrieb (5) weiter in die zweite Richtung (R₂) bis zu einer definierten zweiten Position (P_{2d}) außerhalb der Neutralstellung (4) und Ermitteln einer ersten Wegstrecke (W₁) von der Neutralstellung (4) zu der definierten zweiten Position (P_{2d});
d) Reduzieren des Stroms am Ventilantrieb (5), so dass der Ventilschieber (2) von der Rückstellfeder (6) in die erste Richtung (R₁) zurück in die Neutralstellung (4) bewegt wird;
e) Fahren des Ventilschiebers (2) mit dem Ventilantrieb (5) in die zweite Richtung (R₂) bis zu der definierten zweiten Position (P_{2d}) außerhalb der Neutralstellung (4) und Ermitteln einer zweiten Wegstrecke (W₁ₛ) von der Neutralstellung (4) zu der definierten zweiten Position (P_{2d}); und
f) Berechnen des Spiels (Wₛ) als Differenz zwischen der zweiten Wegstrecke und der ersten Wegstrecke.

2. Verfahren nach Anspruch 1, wobei die Neutralstellung (4) des Ventilschiebers (2) ein Neutralstellungsbereich ist, der sich von einer ersten Neutralstellungsendposition (N_{1end}) bis zu einer zweiten Neutralstellungsendposition (N_{2end}) erstreckt, wobei in Schritt b) der Ventilschieber (2) von der Rückstellfeder (6) in die zweite Neutralstellungsendposition (N_{2end}) gedrückt wird und in Schritt d) der Ventilschieber (2) von der Rückstellfeder (6) in die erste Neutralstellungsendposition (N_{1end}) gedrückt wird.

3. Verfahren nach Anspruch 1 oder 2, wobei die Neutralstellung (4) des Ventilschiebers (2) innerhalb eines Überdeckungsbereichs (8) zwischen zwei Öffnungspunkten (P₁ₒ, P₂ₒ) des Hydraulikventils (1) angeordnet ist, wobei Hydraulikleitungen (9) des Hydraulikventils (1) geschlossen sind, wenn die Ventilschieberposition (7) innerhalb des Überdeckungsbereichs (8) liegt und eine Öffnung von Hydraulikleitungen (9) an den zwei Öffnungspunkten (P₁ₒ, P₂ₒ) beginnt.

4. Verfahren nach Anspruch 3, wobei in Schritt a) eine definierte sichere Wegstrecke (W_{d}) gefahren wird, welche kürzer ist als ein Abstand (a) zwischen einer Neutralstellungsendposition (N_{1end}, N_{2end}) und dem entsprechenden Öffnungspunkt (P₁ₒ, P₂ₒ) des Hydraulikventils (1).

5. Verfahren nach Anspruch 3 oder 4, wobei die in Schritt a) angefahrene erste Position (P₁) und/oder die angefahrene definierte zweite Position (P_{2d}) innerhalb des Überdeckungsbereichs (8) des Ventilschiebers (2) angeordnet sind.

6. Verfahren nach einem der vorhergehenden Ansprüche, wobei der Ventilantrieb (5) einen Schrittmotor (10) aufweist, wobei eine Messung von Wegstrecken (W) in dem Verfahren mit durch ein Zählen von Schritten des Schrittmotors (10) erfolgt.

7. Verfahren nach einem der vorhergehenden Ansprüche, wobei die Verfahrensschritte a) bis f) bei einer Erstinbetriebnahme des Systems (3) und/oder bei einer Wiederinbetriebnahme des Systems (3) nach einer Reparatur oder Wartung durchgeführt werden und zumindest das in Schritt f) berechnete Spiel (Wₛ) sowie gegebenenfalls auch weitere Werte in einem Steuergerät (11) zum Betrieb des Systems (3) abgelegt werden, und anschließend für den Betriebs des Systems (3) zur Verfügung zu stehen.

8. Verfahren nach einem der Ansprüche 1 bis 7, wobei die in Schritt c) und Schritt e) angefahrene definierte zweite Position (P_{2d}) ein Öffnungspunkt (P₂ₒ) des Hydraulikventils (1) ist, der in den Schritt c) und Schritt e) anhand von einer hydraulischen Eigenschaft im Hydraulikventil (1) und/oder in einem an das Hydraulikventil (1) angeschlossenen Hydrauliksystem (12) erkannt wird.

9. Verfahren nach Anspruch 8, wobei nach Schritt e) noch folgender Schritt durchgeführt wird:
g) Fahren des Ventilschiebers (2) in die erste Richtung bis zu einer definierten ersten Position (P_{1d});
wobei die in Schritt c) und Schritt e) angefahrene definierte zweite Position (P_{2d}) und die in Schritt g) angefahrene definierte erste Position (P_{2d}) jeweils Öffnungspunkte (P₁ₒ, P₂ₒ) des Hydraulikventils (1) sind, die in den Schritten c), e) und g) anhand einer hydraulischen Eigenschaft im Hydraulikventil (1) und/oder in einem an das Hydraulikventil (1) angeschlossenen Hydrauliksystem (12) erkannt werden.

10. Verfahren nach einem der vorhergehenden Ansprüche, wobei die in Schritt c) und Schritt e) angefahrene definierte zweite Position (P_{2d}) durch eine Federkraft (19) der Rückstellfeder (6) des Hydraulikventils (1) definiert ist, wobei die Federkraft (19) in Schritt c) und in Schritt e) im Ventilantrieb (5) erkannt wird.

11. Verfahren nach einem der vorhergehenden Ansprüche, wobei die in Schritt c) und Schritt e) angefahrene definierte zweite Position (P_{2d}) erkannt wird, in dem der Ventilantrieb (5) mit einem reduzierten Antriebsstrom angesteuert wird und eine mit diesem Antriebsstrom erreichbare Ventilschieberposition (7) die definierte zweite Position (P_{2d}) ist.

12. Verfahren nach einem der vorhergehenden Ansprüche, wobei die in Schritt c) und Schritt e) angefahrene definierte zweite Position (P_{2d}) an dem Auftreten eines Schrittverlustes erkannt, wird, welcher an einem Schrittmotor (10) des Ventilantriebs (5) auftritt und welcher mit einer dafür in einem Steuergerät (11) des Ventilantriebs (5) eingerichteten Schrittverlusterkennung erkannt wird.

13. Verfahren nach einem der vorhergehenden Ansprüche, wobei die Verfahrensschritte a) bis f) bei einer erneuten Inbetriebnahme des Systems (3) nach einer Erstinbetriebnahme des Systems (3) und/oder nach einer Wiederinbetriebnahme des Systems (3) nach einer Reparatur oder Wartung durchgeführt werden und mit den Verfahrensschritten a) bis f) ermittelte Parameter mit in einem Steuergerät (11) abgelegten Parametern verglichen werden, die bei einer vorherigen Durchführung der Verfahrensschritte a) bis f) ermittelt wurden, und basierend auf diesem Vergleich ein Verschleiß des Systems aus Hydraulikventil und Ventilantrieb bestimmt wird.

14. System (3) aufweisend ein Hydraulikventil (1) und einen Ventilantrieb (2), welches zur Durchführung des Verfahrens nach einem der Ansprüche 1 bis 13 eingerichtet ist.

15. Steuergerät (11) für ein System (3) nach Anspruch 14, welches zur Durchführung des Verfahrens nach einem der Ansprüche 1 bis 13 eingerichtet ist.

16. Verfahren zum Betrieb eines System (3) aufweisend ein Hydraulikventil (1) und einen Ventilantrieb (5) zum Antrieb des Hydraulikventils (1), wobei ein Spiel (Wₛ) zwischen dem Ventilantrieb (5) und dem Ventilschieber (2) existiert, wobei in einem Steuergerät (11) zur Steuerung der Betätigung des Ventilschiebers (2) zumindest eine letzte Antriebsrichtung (R) und das Spiel (Wₛ) als Variablen hinterlegt sind und bei einer Betätigung des Ventilschiebers (2) mit dem Ventilantrieb (5) berücksichtigt werden.
